# EUROPEAN PATENT APPLICATION

(11) **EP 4 131 592 A1**
(43) Date of publication of application: **08.02.2023**
(21) Application number: 21781723.8
(22) Date of filing: 24.03.2021
(51) Int. Cl.: H01M 50/148, H01M 50/167

(54) **CYLINDRICAL BATTERY**

(30) Priority: 31.03.2020 JP 2020062247
(71) Applicant: SANYO Electric Co., Ltd., Daito-shi Osaka 574-8534 (JP)
(72) Inventor: KUSANO, Takumi, Osaka-shi, Osaka 540-6207 (JP)
(74) Representative: Novagraaf International SA
(86) International application number: PCT/JP2021/012179
(87) International publication number: WO 2021/200440

(57) **Abstract**

The objective of the present invention is to provide a cylindrical battery with which it is possible to suppress deformation of a sealing plate when the sealing plate is being crimped. A cylindrical battery according to an embodiment of the present disclosure includes an electrode body in which a positive electrode plate and a negative electrode plate are wound with a separator interposed therebetween, an electrolyte, a bottomed cylindrical outer can (20) accommodating the electrode body and the electrolyte, and a sealing plate (30) blocking an opening portion of the outer can (20), wherein: the sealing plate (30) includes a flange portion (31) which is secured by crimping to the opening portion of the outer can (20), a terminal portion (32) formed on the radially inner side of the flange portion (31), and a thin-walled portion (33) which is formed on the radially outer side of the sealing plate (30), and which connects the flange portion (31) and the terminal portion (32); and the thin-walled portion (33) is formed in such a way as to be inclined upward toward the outside from the radially inner side of the sealing plate (30), and is formed in such a way as to connect a part below the central portion of an outer circumferential surface (32A) of the terminal portion (32) to a part above the central portion of an inner circumferential surface (31A) of the flange portion (31).

## Description

### TECHNICAL FIELD

The present disclosure generally relates to a cylindrical battery.

### BACKGROUND ART

A cylindrical battery comprises a bottomed cylindrical exterior housing can that houses an electrode assembly and an electrolyte, and a sealing assembly that seals an opening of the exterior housing can (for example, PATENT LITERATURE 1). The sealing assembly of the above-described cylindrical battery is configured by stacking an external terminal plate and an internal terminal plate with an insulating plate interposed therebetween.

In some instances, the sealing assembly consists only of a plate-shaped member (hereinafter, referred to as a sealing plate). The use of such a sealing plate makes it possible to reduce the number of components compared with the sealing assembly of the above-described cylindrical battery, resulting in a reduction in manufacturing cost. In addition, the use of such a sealing plate makes it possible to reduce the thickness compared with the sealing assembly of the above-described cylindrical battery, resulting in an increase in the internal volume of the exterior housing can, thereby providing a battery having high energy density.

### CITATION LIST

### PATENT LITERATURE

PATENT LITERATURE 1: International Publication No. WO 2016/157749

### SUMMARY

### TECHNICAL PROBLEM

Meanwhile, although the sealing plate has a thin part formed therein to rupture when an abnormality occurs in the battery and an internal pressure increases, the thin part may be deformed when the sealing plate is fixed by crimping to the opening of the exterior housing can, which may cause variation in position of an upper face of the sealing plate. As a result, the total height of the cylindrical battery comprising the sealing plate may vary.

It is an advantage of the present disclosure to provide a cylindrical battery that can reduce deformation of a sealing plate at the time of crimping of the sealing plate.

### SOLUTION TO PROBLEM

The cylindrical battery of an aspect of the present disclosure is a cylindrical battery comprising: an electrode assembly in which a positive electrode plate and a negative electrode plate are wound with a separator interposed between the positive electrode plate and the negative electrode plate; an electrolyte; a bottomed cylindrical exterior housing can that houses the electrode assembly and the electrolyte; and a sealing plate that seals an opening of the exterior housing can, wherein the sealing plate has a flange part that is fixed by crimping to the opening of the exterior housing can, a terminal part that is formed further on an inside in a radial direction than the flange part, and a thin part that connects the flange part and the terminal part, and the thin part is formed to be inclined upward from an inside toward an outside in a radial direction of the sealing plate and is formed to connect a portion below a central part of an outer peripheral face of the terminal part and a portion above a central part of an inner peripheral face of the flange part.

### ADVANTAGEOUS EFFECTS OF INVENTION

An aspect of the present disclosure makes it possible to reduce the deformation of the sealing plate at the time of crimping of the sealing plate.

### BRIEF DESCRIPTION OF DRAWING

FIG. 1 is a sectional view of a cylindrical battery of an example of an embodiment.
FIG. 2 is a sectional view of a sealing plate of an example of an embodiment.

### DESCRIPTION OF EMBODIMENTS

Hereinafter, embodiments of the present disclosure will be described with reference to the drawings. The shapes, materials, and numbers described below are examples, and may be appropriately modified with specifications of cylindrical batteries. Hereinafter, similar elements will be represented by the same reference signs in all drawings.

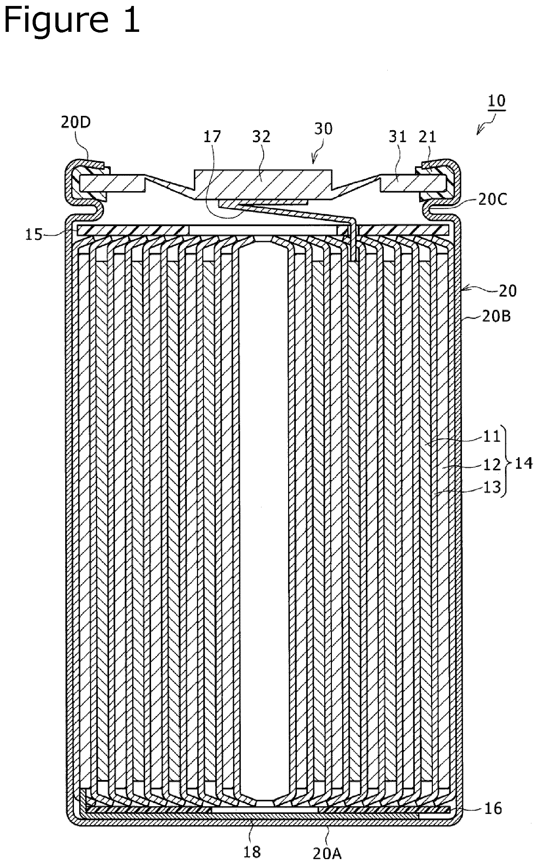

A cylindrical battery 10 of an example of an embodiment will be described with reference to FIG. 1. FIG. 1 is a sectional view of the cylindrical battery 10.

As illustrated in FIG. 1, the cylindrical battery 10 comprises an electrode assembly 14, an electrolyte, an exterior housing can 20 that houses the electrode assembly 14 and the electrolyte, and a sealing plate 30 that seals an opening of the exterior housing can 20. The electrode assembly 14 includes a positive electrode plate 11, a negative electrode plate 12, and a separator 13, and has a structure in which the positive electrode plate 11 and the negative electrode plate 12 are spirally wound with the separator 13 interposed therebetween. Hereinafter, for convenience of description, the sealing plate 30 side (an opening side of the exterior housing can 20) of the cylindrical battery 10 will be defined as the "upper side", and a bottom face part 20A side of the exterior housing can 20 will be defined as the "lower side."

The positive electrode plate 11 has a positive electrode core, and a positive electrode mixture layer formed on at least one face of the core. For the positive electrode core, there can be used a foil of a metal such as aluminum or an aluminum alloy, which is stable in a potential range of the positive electrode plate 11, a film in which such a metal is provided on a surface layer thereof, and the like. The positive electrode mixture layer includes a positive electrode active material, a conductive agent such as acetylene black, and a binder such as polyvinylidene fluoride, and is preferably formed on each side of the positive electrode core. For the positive electrode active material, there is used, for example, a lithium-transition metal composite oxide. The positive electrode plate 11 can be manufactured by applying a positive electrode mixture slurry including a positive electrode active material, a conductive agent, a binder, and the like on the positive electrode core, drying the resulting coating film, and then compressing the coating film to form a positive electrode mixture layer on each side of the core.

The negative electrode plate 12 has a negative electrode core, and a negative electrode mixture layer formed on at least one face of the core. For the negative electrode core, there can be used a foil of a metal such as copper or a copper alloy, which is stable in a potential range of the negative electrode plate 12, a film in which such a metal is provided on a surface layer thereof, and the like. The negative electrode mixture layer includes a negative electrode active material and a binder such as styrene-butadiene rubber (SBR), and is preferably formed on each side of the negative electrode core. For the negative electrode active material, there is used, for example, graphite, or a silicon-containing compound. The negative electrode plate 12 can be manufactured by applying a negative electrode mixture slurry including a negative electrode active material, a binder, and the like on the negative electrode core, drying the resulting coating film, and then compressing the coating film to form a negative electrode mixture layer on each side of the core.

For the electrolyte, a non-aqueous electrolyte is used, for example. The non-aqueous electrolyte includes a non-aqueous solvent, and an electrolyte salt dissolved in the non-aqueous solvent. For the non-aqueous solvent, there can be used esters, ethers, nitriles, amides, a mixed solvent containing at least two of those mentioned above, and the like. The non-aqueous solvent may also contain a halogen substitute in which at least a part of hydrogen of these solvents is substituted with a halogen atom such as fluorine. Note that the non-aqueous electrolyte is not limited to a liquid electrolyte, but may be a solid electrolyte. For the electrolyte salt, there is used, for example, a lithium salt such as LiPF₆. The kind of the electrolyte is not limited to a particular kind of electrolyte, but may also be an aqueous electrolyte.

The cylindrical battery 10 has insulating plates 15 and 16 arranged on the upper and lower sides of the electrode assembly 14, respectively. In the example illustrated in FIG. 1, a positive electrode lead 17 connected to the positive electrode plate 11 extends to the sealing plate 30 side through a through hole of the insulating plate 15, and a negative electrode lead 18 connected to the negative electrode plate 12 extends to the bottom face part 20A side of the exterior housing can 20 along the outside of the insulating plate 16. The positive electrode lead 17 is connected, by welding or the like, to a bottom face of a terminal part 32 of the sealing plate 30, and the sealing plate 30 serves as a positive electrode external terminal. The negative electrode lead 18 is connected, by welding or the like, to an inner face of the bottom face part 20A of the exterior housing can 20, and the exterior housing can 20 serves as a negative electrode external terminal.

As described above, the cylindrical battery 10 has the exterior housing can 20, and the sealing plate 30 that seals the opening of the exterior housing can 20. The exterior housing can 20 is a bottomed cylindrical metallic container including the bottom face part 20A and a lateral face part 20B. The bottom face part 20A has a disk shape, and the lateral face part 20B is formed into a cylindrical shape along an outer peripheral edge of the bottom face part 20A. The sealing plate 30 is fixed by crimping to the opening of the exterior housing can 20 with a gasket 21 interposed therebetween.

More specifically, the sealing plate 30 is supported by a grooved part 20C of the exterior housing can 20, and is fixed by crimping by a crimping part 20D of the exterior housing can 20. The grooved part 20C is formed into an annular shape along the circumferential direction of the exterior housing can 20 to have a part of its lateral face part 20B configured to project to the inside in the vicinity of the opening of the exterior housing can 20. The crimping part 20D is formed into an annular shape along the circumferential direction of the exterior housing can 20 at the opening end.

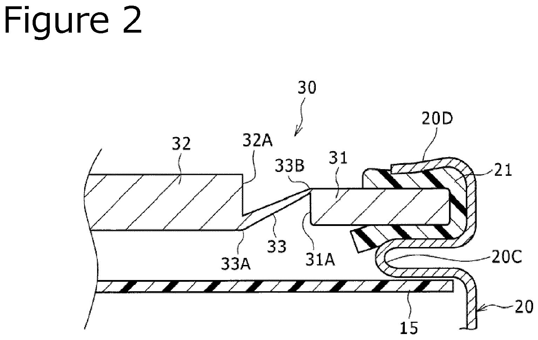

The sealing plate 30 will be described with reference to FIG. 2. FIG. 2 is a sectional view of the sealing plate 30.

The sealing plate 30 is a member that seals the opening of the exterior housing can 20 as described above. The sealing plate 30 is formed into a substantial disk shape in a plan view, and is produced by pressing a plate material made of, for example, aluminum or an aluminum alloy. The sealing plate 30 has a function of venting gas within the cylindrical battery 10 if the internal pressure of the cylindrical battery 10 increases at the time of abnormality of the cylindrical battery 10.

As illustrated in FIG. 2, the sealing plate 30 has a flange part 31 that is fixed by crimping to the opening of the exterior housing can 20, and the terminal part 32 that is formed further on an inside in a radial direction than the flange part 31, and a thin part 33 that connects the flange part 31 and the terminal part 32.

The flange part 31 is a portion that is supported by the grooved part 20C of the exterior housing can 20, and that is fixed by crimping by the crimping part 20D of the exterior housing can 20. The flange part 31 is formed into a substantially annular shape. An outer end part 33B of the thin part 33 is connected to an inner peripheral face 31A of the flange part 31. Hereinafter, portions obtained by equally dividing the inner peripheral face 31A of the flange part 31 into three in the up-and-down direction are individually referred to as an upper part, a central part, and a lower part. The upper part of the inner peripheral face 31A includes at least an upper end of the inner peripheral face 31A.

The terminal part 32 is a portion to which the positive electrode lead 17 is joined, and serves as a positive electrode internal terminal. In order to connect a plurality of cylindrical batteries 10 to one another so that the cylindrical batteries 10 are formed as an assembled battery, a lead plate can be joined to any one of upper faces of the terminal part 32 and the flange part 31. The terminal part 32 is formed into a substantial disk shape. An inner end part 33A of the thin part 33 is connected to an outer peripheral face 32A of the terminal part 32. Hereinafter, portions obtained by equally dividing the outer peripheral face 32A of the terminal part 32 into three in the up-and-down direction are individually referred to as an upper part, a central part, and a lower part. The lower part of the outer peripheral face 32A includes at least a lower end of the outer peripheral face 32A.

The thin part 33 is a portion that ruptures when the internal pressure of the cylindrical battery 10 increases. In addition, the thin part 33 is a portion that connects the terminal part 32 and the flange part 31 as described above. The thin part 33 is formed into a substantially annular shape.

The thin part 33 is formed to be inclined upward from the inside toward the outside in the radial direction of the sealing plate 30. For example, both of the upper face and the bottom face of the thin part 33 are formed to be inclined upward from the inside toward the outside in the radial direction. An inclination angle of the upper face of the thin part 33 is preferably formed to be smaller than an inclination angle of a bottom face of the thin part 33.

The thin part is formed into a tapered shape from the inside toward the outside in the radial direction of the sealing plate. For example, in the thin part 33, a thickness (a length in the up-and-down direction) of the outer end part 33B is formed to be smaller than that of the inner end part 33A. In the thin part 33, the thickness of the outer end part 33B is preferably formed to be minimized.

When the internal pressure of the cylindrical battery 10 increases, the sealing plate 30 is pressed upward by the gas pressure, the thin part 33 is inverted from a state of being inclined upward from the inside toward the outside in the radial direction to a state of being inclined downward, and the outer end part 33B of the thin part 33 ruptures, whereby a gas vent port is formed.

In the thin part 33, the inner end part 33A is connected to a portion (the central part and the lower part) below the central part of the outer peripheral face 32A of the terminal part 32, and the outer end part 33B is connected to a portion (the central part and the upper part) above the central part of the inner peripheral face 31A of the flange part 31. Here, a fact that the inner end part 33A is connected to a portion below the central part of the outer peripheral face 32A means that the inner end part 33A is connected to at least a part in the portion below the central part of the outer peripheral face 32A, and a fact that the outer end part 33B is connected to a portion above the central part of the inner peripheral face 31A means that the outer end part 33B is connected to at least a part in the portion above the central part of the inner peripheral face 31A.

More preferably, in the thin part 33, the inner end part 33A is connected to the lower part of the outer peripheral face 32A of the terminal part 32, and a lower face of the thin part 33 is formed to be continuous with a lower face of the terminal part 32. In the thin part 33, the outer end part 33B is connected to the upper part of the inner peripheral face 31A of the flange part 31, and an upper face of the thin part 33 is formed to be continuous with an upper face of the flange part 31.

The cylindrical battery 10 makes it possible to reduce the deformation of the sealing plate 30 at the time of crimping of the sealing plate 30. More specifically, a deformation amount of the thin part 33 can be reduced at the time of crimping of the sealing plate 30, which makes it possible to reduce variation in position in the up-and-down direction of the terminal part 32.

Note that the present invention is not limited to the above embodiment and modified example, and various changes and improvements are possible within the matters described in the claims of the present application.

The present disclosure will be further described below with Examples, but the present disclosure is not limited to these Examples.

### EXAMPLES

### <Example 1>

### [Production of Sealing Plate]

A sealing plate was produced by pressing a plate material of aluminum. In the sealing plate, a flange part to be fixed by crimping to an opening of an exterior housing can was formed into a substantially annular shape, a terminal part having a substantial disk shape was formed further on an inside in a radial direction than the flange part, and a thin part for connecting the terminal part and the flange part was formed. The thin part was formed to be inclined upward from an inside toward an outside in the radial direction of the sealing plate. The thin part was formed to connect a lower part of an outer peripheral face of the terminal part and an upper part of an inner peripheral face of the flange part.

### [Production of Battery Case]

A bottomed cylindrical exterior housing can made of a nickel-plated steel sheet was subjected to plastic forming to form a circumferential grooved part. An opening of the exterior housing can was crimped and sealed using the sealing plate into which a gasket was inserted, and an empty battery case having no electrode assembly and no electrolyte was produced.

### <Example 2>

A battery case was produced in the same manner as the battery case in Example 1 except that the thin part of the sealing plate was formed to connect the lower part of the outer peripheral face of the terminal part and the central part of the inner peripheral face of the flange part.

### <Comparative Example 1>

A battery case was produced in the same manner as the battery case in Example 1 except that the thin part of the sealing plate was formed to connect the lower part of the outer peripheral face of the terminal part and the lower part of the inner peripheral face of the flange part.

### <Comparative Example 2>

A battery case was produced in the same manner as the battery case in Example 1 except that the thin part of the sealing plate was formed to connect the central part of the outer peripheral face of the terminal part and the central part of the inner peripheral face of the flange part.

### <Comparative Example 3>

A battery case was produced in the same manner as the battery case in Example 1 except that the thin part of the sealing plate was formed to connect the upper part of the outer peripheral face of the terminal part and the upper part of the inner peripheral face of the flange part.

### [Cross-Sectional Observation of Sealing Plate]

In each of the battery cases produced as described above, the sealing plate was embedded in an epoxy resin, and the cured epoxy resin was cut off so that the cross section of the sealing plate appears, and the cross section of the sealing plate was observed. The results are summarized in Table 1 together with the shape and connection positions of the thin part.

**[Table 1]**

| | Shape and connection positions of thin part | | Deformation amount |
|---|---|---|---|
| Example 1 | 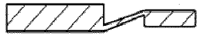 | From lower part of terminal part to upper part of flange part | Small |
| Example 2 | 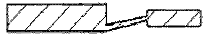 | From lower part of terminal part to central part of flange part | Medium |
| Comparative Example 1 | 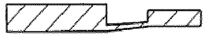 | From lower part of terminal part to lower part of flange part | Large |
| Comparative Example 2 | 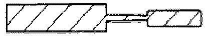 | From central part of terminal part to central part of flange part | Large |
| Comparative Example 3 | 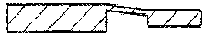 | From upper part of terminal part to upper part of flange part | Large |

In Example 1, there was little deformation amount in the thin part, and there was little variation in position in the up-and-down direction of the terminal part. In Example 2, the thin part was slightly deformed to become horizontal from an incline, and the position in the up-and-down direction of the terminal part was slightly moved upward. In Comparative Examples 1 and 3, the thin part was deformed to become horizontal from an incline, and the position in the up-and-down direction of the terminal part was largely moved upward. In Comparative Example 2, the thin part was largely deformed, and the position in the up-and-down direction of the terminal part was largely moved.

The results described above show that it is preferable that the thin part is inclined upward from the inside toward the outside in the radial direction of the sealing plate, and the portion below the central part of the outer peripheral face of the terminal part is connected to the portion above the central part of the inner peripheral face of the flange part. Furthermore, the deformation reduction effect of the thin part in Example 1 can be remarkably obtained, and therefore it is found that the thin part is more preferably connected to the lower part of the outer peripheral face of the terminal part and the upper part of the inner peripheral face of the flange part.

### REFERENCE SIGNS LIST

10 Cylindrical battery, 11 Positive electrode plate, 12 Negative electrode plate, 13 Separator, 14 Electrode assembly, 15 Insulating plate, 16 Insulating plate, 17 Positive electrode lead, 18 Negative electrode lead, 20 Exterior housing can, 20A Bottom face part, 20B Lateral face part, 20C Grooved part, 20D crimping part, 21 Gasket, 30 Sealing plate, 31 Flange part, 31A Inner peripheral face, 32 Terminal part, 32A Outer peripheral face, 33 Thin part, 33A Inner end part, 33B Outer end part

## Claims

1. A cylindrical battery, comprising:
an electrode assembly in which a positive electrode plate and a negative electrode plate are wound with a separator interposed between the positive electrode plate and the negative electrode plate;
an electrolyte;
a bottomed cylindrical exterior housing can that houses the electrode assembly and the electrolyte; and
a sealing plate that seals an opening of the exterior housing can, wherein
the sealing plate has a flange part that is fixed by crimping to the opening of the exterior housing can, a terminal part that is formed further on an inside in a radial direction than the flange part, and a thin part that connects the flange part and the terminal part, and
the thin part is formed to be inclined upward from an inside toward an outside in a radial direction of the sealing plate and is formed to connect a portion below a central part of an outer peripheral face of the terminal part and a portion above a central part of an inner peripheral face of the flange part.

2. The cylindrical battery according to claim 1, wherein the thin part is formed to connect a lower part of the outer peripheral face of the terminal part and an upper part of the inner peripheral face of the flange part.

3. The cylindrical battery according to claim 1 or 2, wherein the thin part is formed into a tapered shape from the inside toward the outside in the radial direction of the sealing plate.
